# EUROPÄISCHE PATENTSCHRIFT

(11) **EP 0 590 215 B1**
(45) Veröffentlichungstag und Bekanntmachung des Hinweises auf die Patenterteilung: **06.12.1995**
(21) Anmeldenummer: 92710030.5
(22) Anmeldetag: 22.09.1992
(51) Int. Cl.: F16N 7/38, F16N 29/02

(54) **Vorrichtung zur Schmierstoffversorgung**
Lubrication supply device
Dispositif d'alimentation de lubrifiant

(43) Veröffentlichungstag der Anmeldung: 06.04.1994
(73) Patentinhaber: DE LIMON FLUHME GMBH, D-40227 Düsseldorf (DE)
(72) Erfinder: Morgenstern, Gerhard, 4020 Mettmann (DE); Saretzky, Horst, 5828 Enneptal 13 (DE)
(74) Vertreter: Stenger, Watzke & Ring Patentanwälte

(56) Entgegenhaltungen:
- DE-A- 3 129 048
- FR-A- 2 561 352
- US-A- 2 047 352
- US-A- 2 232 620

## Beschreibung

Die Erfindung betrifft eine Vorrichtung zur Schmiermittelversorgung, insbesondere zur Einleitungs-Zentralschmierung von Kettenantrieben, mit einer den Schmierstoff aus einem Vorratsbehälter fördernden Pumpe, einer über ein schaltbares Ventil an die Druckseite der Pumpe angeschlossenen Speiseleitung, einer der Anzahl der Schmierstellen entsprechenden Anzahl an Schmierstoff-Verteilern, die in Abhängigkeit vom Druck in der Speiseleitung öffnen und dabei die für die jeweilige Schmierstelle erforderliche Schmierstoffmenge abgeben, einer sich an die Speiseleitung anschließenden und von dem jeweiligen Schmierstoff-Verteiler zu dem Vorratsbehälter führenden Rückführleitung, sowie mit Mitteln, um in der Speiseleitung wahlweise ein hohes Druckniveau, welches den Öffnungsdruck des Schmierstoff-Verteilers übersteigt, oder ein demgegenüber abgesenktes Druckniveau zu erzeugen, welches unterhalb des Öffnungsdrucks des Schmierstoff-Verteilers liegt.

In der DE-U-7826547 ist eine Einleitungs-Zentralschmierung für Kettenantriebe offenbart, bei der der von einer dauernd angetriebenen Pumpe geförderte Schmierstoff ventilgesteuert zu einzelnen Schmierstoff-Verteilern gelangt, von denen die für die jeweilige Schmierstelle erforderliche Schmierstoffmenge dosiert zugemessen wird. Nachteilig bei dieser Vorrichtung ist, daß, insbesondere nach einer Wiederinbetriebnahme der Vorrichtung nach einer längeren Ruhezeit oder nach der Durchführung von Montagearbeiten, Probleme bei der Zumessung der jeweils richtigen Schmierstoffmenge entstehen. Ursächlich für diese Probleme sind Lufteinschlüsse in der Speiseleitung. Diese können in erster Linie dann auftreten, wenn an der Vorrichtung Wartungsarbeiten durchgeführt werden, etwa ein Austausch der Schmierstoff-Verteiler. Die Lufteinschlüsse können aber auch bei der Förderung des Schmierstoffs entstehen, etwa bei der Verwendung von Schmierölen, die unter Druckbeaufschlagung zum Schäumen neigen.

Eine Vorrichtung der eingangs genannten Art ist aus der US-A-2,232,620 bekannt. Hierbei schließt sich an die zu den Schmierstoff-Verteilern führende Speiseleitung eine Rückführleitung an, über die überschüssiger Schmierstoff zurück in den Vorratsbehälter gelangt. Auf diese Weise sollen Lufteinschlüsse in der Speiseleitung verringert werden. Dieser Effekt tritt allerdings nach einem längeren Stillstand der bekannten Vorrichtung erst mit zeitlicher Verzögerung ein. Denn mit einer Wiederinbetriebnahme dieser Vorrichtung sind zunächst die in der Speiseleitung angesammelten Lufteinschlüsse zu beseitigen. Da eine unabhängig von der Schmierstoffzuführung zu den Schmierstoff-Verteilern arbeitende Spülung der Speiseleitung nicht vorgesehen ist, tritt eine Beseitigung der Lufteinschlüsse in der Speiseleitung erst ein, nachdem zuvor das in der Speiseleitung befindliche Schmierstoffvolumen vollständig bis zu den Schmierstoff-Verteilern transportiert und über diese abgegeben wurde. Während dieser Zeit ist wegen der Lufteinschlüsse mit Problemen bei der Zumessung der jeweils richtigen Schmierstoffmenge zu rechnen.

Der Erfindung liegt die **Aufgabe** zugrunde, bei einer Vorrichtung zur Schmiermittelversorgung, und insbesondere einer Vorrichtung zur Einleitungs-Zentralschmierung von Kettenantrieben, die durch Lufteinschlüsse verursachten Proleme bei der Zumessung der richtigen Schmierstoffmenge zu beseitigen.

Zur **Lösung** dieser Aufgabenstellung wird in Verbindung mit den eingangs genannten Merkmalen vorgeschlagen, daß die Rückführleitung mit einem druckabhängig öffnenden Rückschlagventil versehen ist, und daß die Mittel während der Erzeugung des gegenüber dem Öffnungsdruck des Schmierstoff-Verteilers abgesenkten Druckniveaus zugleich einen Sekundär-Basisdruck aufrechterhalten, welcher unterhalb des Umschichtdrucks des Schmierstoff-Verteilers liegt und eine schnelle Betätigung des Schmierstoff-Verteilers beim Übersteigen des Öffnungsdrucks des Schmierstoff-Verteilers gewährleistet.

Eine solche Vorrichtung ermöglicht eine sehr schnelle Entlüftung des gesamten Schmiermittelstranges. Diese Entlüftung erfolgt vor Beginn der Schmiermittelversorgung, jedoch wird auch während des Betriebs der Vorrichtung jederzeit gewährleistet, daß eventuell eingeschlossene Luftblasen schnell aus der Speiseleitung hinausgelangen. Hierzu ist die als Verlängerung der Speiseleitung ausgebildete Rückführleitung vorgesehen, die von dem jeweiligen Schmierstoff-Verteiler zu dem Vorratsbehälter führt. Über diese Rückführleitung wird ein Rückstrom des Schmiermittels erzeugt, mit dem eventuell eingeschlossene Luftblasen aus dem Bereich der Speiseleitung hinausgelangen. In der Rückführleitung ist ein Rückschlagventil angeordnet, dessen Öffnungsdruck unterhalb des Druckniveaus in der Speiseleitung liegt, so daß Schmierstoff über dieses Rückschlagventil entweichen und nicht in den Bereich der Speiseleitung zurückfließen kann.

Ferner sind Mittel vorgesehen, um in der Speiseleitung wahlweise ein hohes oder ein demgegenüber abgesenktes Druckniveau zu erzeugen. Das hohe Druckniveau übersteigt den Öffnungsdruck der Schmierstoff-Verteiler, so daß Schmiermittel zu den jeweiligen Schmierstellen gelangen kann. Bei Vorliegen des abgesenkten Druckniveaus wird der Öffnungsdruck der Schmierstoff-Verteiler nicht erreicht, so daß der Förderstrom von der Pumpe einschließlich eventuell darin eingeschlossener Luftblasen aus einem Teil der Speiseleitung in den Vorratsbehälter entweichen kann.

Bei einer bevorzugten Weiterbildung der Vorrichtung ist vorgesehen, daß im Verlauf der Rückführleitung dem Rückschlagventil ein Überströmventil nachgeschaltet ist, dessen Öffnungsdruck den Öffnungsdruck der Schmierstoff-Verteiler übersteigt, und daß die Rückführleitung zwischen Überströmventil und Rückschlagventil ein Sammelvolumen aufweist. Infolge des zwischen dem Rückschlagventil und dem Überströmventil angeordneten Sammelvolumens kann bei Inbetriebnahme der Vorrichtung Schmierstoff einschließlich eventuell darin enthaltener Luft in das Sammelvolumen einströmen und sich zunächst dort ansammeln. Durch eine Erhöhung des Druckniveaus in der Speiseleitung über den Öffnungsdruck des Überströmventils hinaus kann der Inhalt des Sammelvolumens dann über die Rückführleitung zurück in den Vorratsbehälter gefördert werden. Hierzu wird mit der Erfindung vorgeschlagen, daß der Öffnungsdruck des Überströmventils niedriger liegt als der von der Pumpe maximal erzeugbare Druck in der Speiseleitung.

Bei einer Ausgestaltung der Vorrichtung ist vorgesehen, daß die Speiseleitung in mehrere, unabhängig voneinander zuschaltbare Schmiermittelstränge unterteilt ist und jeder der Schmiermittelstränge über die sich anschließende Rückführleitung und das jeweilige Rückschlagventil in das gemeinsame Sammelvolumen mündet. In diesem Fall vermeiden die Rückschlagventile eine Verbindung zwischen den einzelnen Schmiermittelsträngen, so daß das Schmiermittel nicht über das gemeinsame Sammelvolumen in andere Schmiermittelstränge zurückströmen kann.

Vorzugsweise ist das Überströmventil nahe des oberen Bereichs des Sammelvolumens angeordnet. Auf diese Weise kann die infolge ihres geringen spezifischen Gewichts im oberen Teil des Sammelvolumens befindliche Luft leichter entweichen.

Vorzugsweise befindet sich das Sammelvolumen in einem Behälter, an dem das Überströmventil sowie die Rückschlagventile befestigt und vorzugsweise eingeschraubt sind. Hierdurch lassen sich Rückschlagventile, Überströmventil und Sammelvolumen zu einer baulichen Einheit zusammenfassen.

Bei einer bevorzugten Weiterbildung der Erfindung ist vorgesehen, daß die Mittel zur wahlweisen Erzeugung eines hohen oder einem demgegenüber abgesenkten Druckniveaus aus einem Zweiwege-Ventil bestehen, welches in seinen beiden Stellungen die Druckseite der Pumpe mit der Speiseleitung verbindet, wobei das Zweiwege-Ventil in seiner ersten Stellung mit der Speiseleitung und unter Zwischenschaltung einer Drossel mit dem Vorratsbehälter verbunden ist. In dieser Stellung des Zweiwege-Ventils gelangt sämtlicher von der Pumpe geförderter Schmierstoff in den Vorratsbehälter und bewirkt in den mitverbundenen Speiseleitungen und Schmiermittelsträngen einen bestimmten Vordruck, welcher unter dem Niveau des Umschichtdruckes der Schmiermittelverteiler liegt. In der zweiten Stellung des Zweiwege-Ventils gelangt dagegen sämtlicher von der Pumpe geförderter Schmierstoff in die Speiseleitung bzw. in die einzelnen Schmiermittelstränge. In dieser Stellung wird ein Druck aufgebaut, der zur Öffnung der einzelnen angeschlossenen Schmiermittel-Verteiler ausreicht. In der ersten Stellung des Zweiwege-Ventils hingegen gelangt ein gedrosselter Förderstrom des Schmiermittels unmittelbar in den Vorratsbehälter zurück. Es kann sich daher kein Druck aufbauen, der zur Öffnung der Schmiermittel-Verteiler ausreichend wäre, so daß sich nur ein vorwählbarer Niederdruck in der Speiseleitung bzw. in den Schmiermittelsträngen einstellt, nicht hingegen eine Schmiermittelversorgung der einzelnen Schmierstellen.

Vorzugsweise ist die Drossel zur Einstellung des abgesenkten Druckniveaus veränderbar ausgebildet. Hierdurch ist eine Anpassung des in der Speiseleitung herrschenden Druckniveaus für eine schnelle Betätigung der beteiligten Elemente möglich.

Schließlich wird vorgeschlagen, daß bei einem maximalen Förderdruck der Pumpe von 25 bis 30 bar die Öffnungsdrücke der Schmierstoff-Verteiler 6 bis 12 bar, der Rückschlagventile 0,5 bis 1 bar und des Überströmventils 15 bis 20 bar betragen.

Nähere Einzelheiten und Vorteile der Erfindung ergeben sich aus der nachfolgenden Beschreibung der zugehörigen Zeichnung. Darin ist eine Vorrichtung zur Einleitungs-Zentralschmierung von Kettenantrieben in Form eines Funktions-Schaubildes dargestellt.

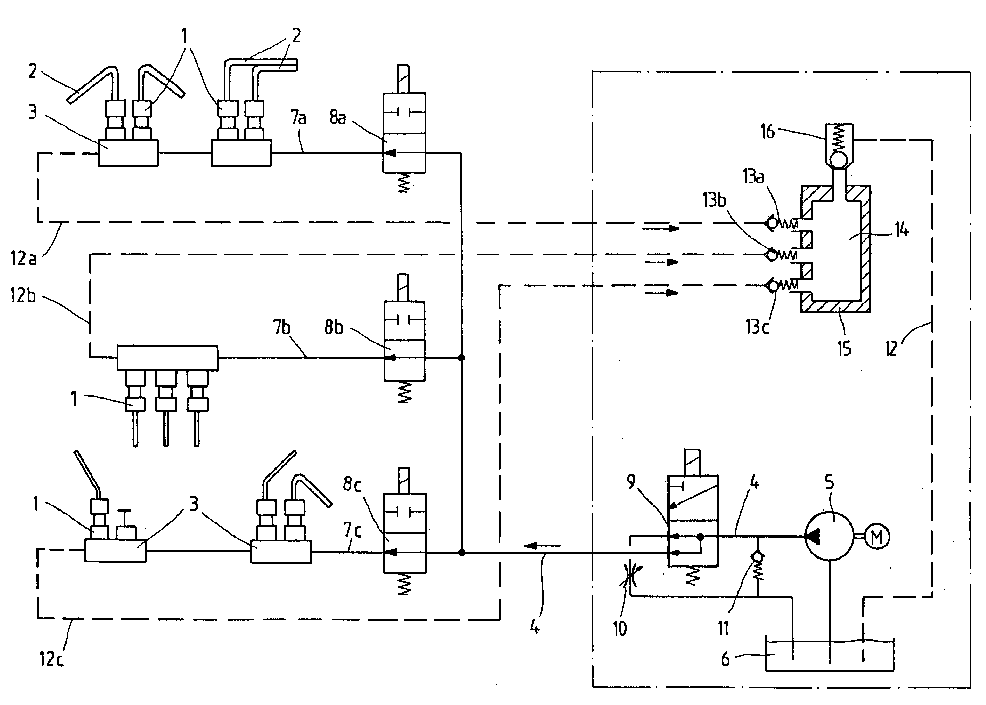

Die Vorrichtung verfügt über eine Vielzahl an Schmierstoff-Verteilern 1, die ausgangsseitig mit Rohren 2 versehen sind, die zu den einzelnen Schmierstellen des in der Zeichnung nicht dargestellten Kettenantriebs führen. Jeder der Schmierstoff-Verteiler 1 verfügt über ein eingebautes Rückschlagventil, welches bei Erreichen eines bestimmten Öffnungsdruckes durch die Zuteilmenge eines integrierten Dosierelements geöffnet wird und auf diese Weise eine genau dosierte Menge zu dem jeweiligen Rohr 2 abgibt.

Jeweils mehrere Schmierstoff-Verteiler 1 sind in eine gemeinsame Verteilerleiste 3 eingeschraubt. Die Verteilerleisten 3 sind am Ende einer mehrsträngig ausgebildeten Speiseleitung 4 angeordnet, die die einzelnen Verteilerleisten 3 mit einer Pumpe 5 verbindet, welche den Schmierstoff aus einem Vorratsbehälter 6 fördert.

Bei dem Ausführungsbeispiel besteht die Speiseleitung 4 aus insgesamt drei Schmiermittelsträngen 7a,7b,7c. Jeder dieser Schmiermittelstränge 7a,7b,7c ist über ein eigenes Ventil 8a,8b,8c getrennt schaltbar.

In dem allen drei Schmiermittelsträngen 7a,7b,7c gemeinsamen Teil der Speiseleitung 4 ist ein Zweiwege-Ventil 9 angeordnet. In der ersten, in der Zeichnung dargestellten Stellung des Zweiwege-Ventils 9 gelangt Schmiermittel von der Pumpe 5 zu den einzelnen Schmiermittelsträngen 7a,7b,7c. Der gedrosselte Förderstrom wird dabei jedoch zu dem Vorratsbehälter 6 zurückgeführt. Zur Drosselung dieses Förderstromes ist eine einstellbare Drossel 10 vorgesehen. In seiner zweiten, in der Zeichnung nicht dargestellten Stellung verbindet das Zweiwege-Ventil 9 die Pumpe 5 mit der Speiseleitung 4, so daß sämtliches, von der Pumpe 5 gefördertes Schmiermittel zu den einzelnen Schmiermittelsträngen 7a,7b,7c gelangt. Zur Absicherung des Systems ist ein Sicherheitsventil 11 vorgesehen, welches einen unzulässig hohen Druckaufbau in der Speiseleitung 4 vermeidet.

In Verlängerung der Speiseleitung 4 sind an die Verteilerleisten 3 der Schmierstoff-Verteiler 1 Rückführleitungen 12a,12b,12c angeschlossen, die jeweils über ein Rückschlagventil 13a,13b,13c in ein gemeinsames Sammelvolumen 14 münden. Das Sammelvolumen 14 befindet sich in einem nach Art einer Leiste ausgebildeten Behälter 15, in den die einzelnen Rückschlagventile 13a,13b,13c eingeschraubt sind. Im oberen Bereich des Behälters 15 ist außerdem ein druckbetätigt öffnendes Überströmventil 16 am Behälter 15 angeschraubt. Eine gemeinsame Rückführleitung 12 führt von der Niedrigdruckseite des Überströmventils 16 zurück zu dem Vorratsbehälter 6.

Die Vorrichtung arbeitet wie folgt:

Bei der Inbetriebnahme oder nach langer Stillstandszeit wird die Pumpe 5 in Gang gesetzt. In den dargestellten Stellungen des Zweiwege-Ventils 9 und der Ventile 8a,8b und 8c entsteht durch den Förderstrom von der Pumpe 5 über die einstellbare Drossel 10 in den Speiseleitungen des Gesamtsystems bis zu den Rückschlagventilen 13a,13b und 13c als Basiseffekt ein Druckniveau von ca. 2-3 bar. Bei dieser Phase wird der erste Befüll- und Entlüftungsvorgang in den Speise- und Rückführleitungen bis zu den Rückschlagventilen 13a,13b und 13c eingeleitet. Erst durch die separate Zuschaltung der einzelnen Schmiermittelstränge durch Veränderung der Schaltstellung des Zweiwege-Ventils 9 und durch wechselweise Schaltstellungen der Ventile 8a,8b und 8c wird der volle Förderstrom von der Pumpe 5 den einzelnen Strängen zugeführt. Nach diesem Vorgang wird jegliche noch verbliebene Luft aus der Speiseleitung 4 und z.B. aus dem Schmiermittelstrang 7a und Rückführleitung 12a mitgerissen und über das Rückschlagventil 13a, dem Behälter 15, dem Überströmventil 16 und Rückführleitung 12 in den Vorratsbehälter 6 abgeführt. Die infolge ihres geringen spezifischen Gewichts im oberen Teil des Behälters 15 angesammelte Luft kann über das Überströmventil 16 zusammen mit Schmiermittel in den Vorratsbehälter 6 zurückgelangen. Das Überströmventil 16 ist für einen Öffnungsdruck von ca. 15 bis 20 bar ausgelegt. Dieser Druck läßt sich erreichen, indem bei vollem Förderdruck der Pumpe 5 von 25 bis 30 bar nur ein einziger der Schmiermittelstränge 7a,7b,7c freigegeben wird, so daß die in diesem Schmiermittelstrang 7a,7b,7c angeordneten Schmierstoff-Verteiler 1 alleine nicht in der Lage sind, diese Schmiermittelmenge abzugeben. Es kommt zu einem zunehmenden Druckaufbau bis zum Erreichen des Öffnungsdrucks des Überströmventils 16. Das Schmiermittel kann dann über die gemeinsame Rückführleitung 12 in den Vorratsbehälter 6 abströmen.

Durch diese Zustandsänderung wird z.B. der Schmiermittelstrang 7a, bedingt durch das Überströmventil 16, welches für einen Öffnungsdruck von 15 bis 20 bar ausgelegt ist, unter einen entsprechend erhöhten Druck gesetzt, so daß die Schmierstoffverteiler, welche einen Öffnungsdruck von 6 bis 12 bar haben, schon beim Inbetriebnahme-Takt eine einwandfreie Funktion für die Schmiermittelabgabe haben.

Nach Beendigung des Entlüftungsvorganges mit kurzzeitigem Drucktakt geht das Zweiwege-Ventil 9 wieder in die dargestellte Stellung zurück, so daß der Schmiermittelstrang 7a über die Speiseleitung 4 entspannen kann und die Schmierstoff-Verteiler 1 vom gleichen Schmiermittelstrang ihre Schmiermitteldosiermenge für den nächsten Abschmiertakt umschichten können.

Eine Beeinflussung der verbliebenen Stränge 7b und 7c erfolgt bei diesem Vorgang nicht, da die Rückschlagventile 13b und 13c als sogenannte Sperrventile eine rückwärtswirkende Funktion verhindern. Der gleiche Funktionsablauf gilt sinngemäß auch für die Schmiermittelstränge 7b und 7c.

Durch diese einwandfreie selbsttätige Entlüftung sind bei Luftvorkommnissen im Schmiersystem, gleich aus welchem Grunde, jegliche Betriebs- oder Funktionsstörungen bei den Schmiermittelverteilern 1 ausgeschaltet.

Beim oben beschriebenen Vorgang ist der Förderstrom der Pumpe 5 um ein Vielfaches größer als die Gesamtabgabemenge der Schmiermittelverteiler 1 von den einzelnen Schmiermittelsträngen 7a,7b und 7c.

## Patentansprüche

1. Vorrichtung zur Schmiermittelversorgung, insbesondere zur Einleitungs-Zentralschmierung von Kettenantrieben, mit einer den Schmierstoff aus einem Vorratsbehälter (6) fördernden Pumpe (5), einer über ein schaltbares Ventil (8a, 8b, 8c) an die Druckseite der Pumpe (5) angeschlossenen Speiseleitung (4), einer der Anzahl der Schmierstellen entsprechenden Anzahl an Schmierstoff-Verteilern (1), die in Abhängigkeit vom Druck in der Speiseleitung (4) öffnen und dabei die für die jeweilige Schmierstelle erforderliche Schmierstoffmenge abgeben, einer sich an die Speiseleitung (4) anschließenden und von dem jeweiligen Schmierstoff-Verteiler (1) zu dem Vorratsbehälter (6) führenden Rückführleitung (12, 12a, 12b, 12c), sowie mit Mitteln (9), um in der Speiseleitung (4) wahlweise ein hohes Druckniveau, welches den Öffnungsdruck des Schmierstoff-Verteilers (1) übersteigt, oder ein demgegenüber abgesenktes Druckniveau zu erzeugen, welches unterhalb des Öffnungsdrucks des Schmierstoff-Verteilers (1) liegt, **dadurch gekennzeichnet**, daß die Rückführleitung (12, 12a, 12b, 12c) mit einem druckabhängig öffnenden Rückschlagventil (13a, 13b, 13c) versehen ist, und daß die Mittel (9) während der Erzeugung des gegenüber dem Öffnungsdruck des Schmierstoff-Verteilers (1) abgesenkten Druckniveaus zugleich einen Sekundär-Basisdruck aufrechterhalten, welcher unterhalb des Umschichtdrucks des Schmierstoff-Verteilers (1) liegt und eine schnelle Betätigung des Schmierstoff-Verteilers (1) beim Übersteigen des Öffnungsdrucks des Schmierstoff-Verteilers (1) gewährleistet.

2. Vorrichtung nach Anspruch 1, dadurch gekennzeichnet, daß im Verlauf der Rückführleitung (12) dem Rückschlagventil (13a,13b,13c) ein Uberströmventil (16) nachgeschaltet ist, dessen Öffnungsdruck den Öffnungsdruck der Schmierstoff-Verteiler (1) übersteigt, und daß die Rückführleitung (12) zwischen Uberströmventil (16) und Rückschlagventil (13a,13b,13c) ein Sammelvolumen (14) aufweist.

3. Vorrichtung nach Anspruch 2, dadurch gekennzeichnet, daß der Öffnungsdruck des Überströmventils (16) niedriger liegt als der von der Pumpe (5). maximal erzeugbare Druck in der Speiseleitung (4).

4. Vorrichtung nach Anspruch 2 oder Anspruch 3, dadurch gekennzeichnet, daß die Speiseleitung (4) in mehrere, unabhängig voneinander zuschaltbare Schmiermittelstränge (7a,7b,7c) unterteilt ist und jeder der Schmiermittelstränge (7a,7b,7c) über die sich anschließende Rückführleitung (12a,12b,12c) und das jeweilige Rückschlagventil (13a,13b,13c) in das gemeinsame Sammelvolumen (14) mündet.

5. Vorrichtung nach einem der Ansprüche 2 bis 4, dadurch gekennzeichnet, daß das Überströmventil (16) nahe des oberen Bereichs des Sammelvolumens (14) angeordnet ist.

6. Vorrichtung nach einem der Ansprüche 2 bis 5, dadurch gekennzeichnet, daß sich das Sammelvolumen (14) in einem Behälter (15) befindet, an dem das Überströmventil (16) sowie die Rückschlagventile (13a,13b,13c) befestigt, vorzugsweise eingeschraubt, sind.

7. Vorrichtung nach Anspruch 1, dadurch gekennzeichnet, daß die Mittel zur wahlweisen Erzeugung eines hohen oder eines demgegenüber abgesenkten Druckniveaus aus einem Zweiwege-Ventil (9) bestehen, welches in seinen beiden Stellungen die Druckseite der Pumpe (5) mit der Speiseleitung (4) verbindet, wobei das Zweiwege-Ventil (9) ausschließlich in seiner ersten Stellung die Druckseite der Pumpe (5) zusätzlich und unter Zwischenschaltung einer Drossel (10) mit dem Vorratsbehälter (6) verbindet.

8. Vorrichtung nach Anspruch 7, dadurch gekennzeichnet, daß die Drossel (10) zur Einstellung des abgesenkten Druckniveaus veränderbar ausgebildet ist,

9. Vorrichtung nach einem der Ansprüche 1 bis 8, dadurch gekennzeichnet, daß bei einem maximalen Förderdruck der Pumpe (5) von 25 bis 30 bar die Öffnungsdrücke der Schmierstoff-Verteiler (1) 6 bis 12 bar, der Rückschlagventile (13a,13b,13c) 0,5 bis 1 bar und des Uberströmventils (16) 15 bis 20 bar betragen.

## Claims

1. Device for the supply of lubricant, in particular for single-circuit central lubrication of chain drives, with a pump (5) pumping lubricant from a storage receptacle (6), a supply pipe (4) connected by a switchable valve (8a, 8b, 8c) to the delivery side of the pump (5), a number of lubricant distributors (1) corresponding to the number of lubricating points, which open as a function of the pressure in the supply pipe (4) and in the process dispense the quantity of lubricant required for the respective lubricating point, a return pipe (12, 12a, 12b, 12c) adjoining the supply pipe (4) and leading from the respective lubricant distributor (1) to the storage receptacle (6), as well as with means (9) for generating in the supply pipe (4) selectively a high pressure level which exceeds the opening pressure of the lubricant distributor (1), or a comparatively reduced pressure level which is below the opening pressure of the lubricant distributor (1), characterised in that the return pipe (12, 12a, 12b, 12c) is provided with a non-return valve (13a, 13b, 13c) which opens as a function of pressure, and in that the means (9) during generation of the pressure level which is reduced compared with the opening pressure of the lubricant distributor (1) also maintain a secondary basic pressure which is below the alternate pressure of the lubricant distributor (1) and ensures rapid actuation of the lubricant distributor (1) on exceeding the opening pressure of the lubricant distributor (1).

2. Device according to claim 1, characterised in that in the course of the return pipe (12) behind the non-return valve (13a, 13b, 13c) is mounted an overflow valve (16) of which the opening pressure exceeds the opening pressure of the lubricant distributors (1), and in that the return pipe (12) between overflow valve (16) and non-return valve (13a, 13b, 13c) comprises a collecting space (14).

3. Device according to claim 2, characterised in that the opening pressure of the overflow valve (16) is lower than the maximum pressure which can be generated by the pump (5) in the supply pipe (4).

4. Device according to claim 2 or claim 3, characterised in that the supply pipe (4) is divided into several lubricant lines (7a, 7b, 7c) which can be connected independently of each other, and each of the lubricant lines (7a, 7b, 7c) leads via the adjoining return pipe (12a, 12b, 12c) and the respective non-return valve (13a, 13b, 13c) into the common collecting space (14).

5. Device according to any of claims 2 to 4, characterised in that the overflow valve (16) is arranged near the upper region of the collecting space (14).

6. Device according to any of claims 2 to 5, characterised in that the collecting space (14) is located in a receptacle (15) to which the overflow valve (16) as well as the non-return valves (13a, 13b, 13c) are attached and preferably screwed in.

7. Device according to claim 1, characterised in that the means for selectively generating a high or comparatively reduced pressure level consist of a two-way valve (9) which in both its positions connects the delivery side of the pump (5) to the supply pipe (4), wherein the two-way valve (9) exclusively in its first position connects the delivery side of the pump (5) additionally and with the interposition of a choke (10) to the storage receptacle (6).

8. Device according to claim 7, characterised in that the choke (10) is variable for adjusting the reduced pressure level.

9. Device according to any of claims 1 to 8, characterised in that with a maximum pumping pressure of the pump (5) of 25 to 30 bars, the opening pressures of the lubricant distributors (1) are 6 to 12 bars, of the non-return valves (13a, 13b, 13c) 0.5 to 1 bar and of the overflow valve (16) 15 to 20 bars.

## Revendications

1. Dispositif d'alimentation en lubrifiant, notamment pour un graissage centralisé par conduite de transmissions par chaîne, comportant une pompe (5) acheminant la matière lubrifiante à partir d'un réservoir (6), un conduit d'alimentation (4) relié au côté refoulement de la pompe (5) par l'intermédiaire d'une soupape commutable (8a, 8b, 8c,), un nombre de distributeurs de matière lubrifiante (1) correspondant au nombre de points de graissage et qui s'ouvrent en fonction de la pression dans le conduit d'alimentation (4) pour ainsi fournir au point de graissage correspondant la quantité nécessaire de matière lubrifiante, un conduit de retour (12, 12a, 12b, 12c) se raccordant au conduit d'alimentation (4) et allant du distributeur de matière lubrifiante (1) correspondant jusqu'au réservoir (6), ainsi que des moyens (9) pour produire, dans le conduit d'alimentation (4), au choix un niveau de pression élevé, qui dépasse la pression d'ouverture du distributeur de matière lubrifiante (1), ou bien un niveau de pression abaissé par rapport à celui-ci et qui se situe au-dessous de la pression d'ouverture du distributeur de matière lubrifiante (1), caractérisé en ce que le conduit de retour (12, 12a, 12b, 12c) est pourvu d'un clapet de non-retour (13a, 13b, 13c), qui s'ouvre en fonction de la pression, et en ce que les moyens (9), pendant la production du niveau de pression abaissé par rapport à la pression d'ouverture du distributeur de matière lubrifiante (1), maintiennent en même temps une pression de base secondaire, qui se situe au-dessous de la pression de modification de distribution du distributeur de matière lubrifiante (1) et qui permet un actionnement rapide du distributeur de matière lubrifiante (1) lors du dépassement de la pression d'ouverture du distributeur de matière lubrifiante (1).

2. Dispositif selon la revendication 1, caractérisé en ce qu'il est prévu, dans le trajet du conduit de retour (12) un clapet de décharge (16) monté à la suite du clapet de non-retour (13a, 13b, 13c) et dont la pression d'ouverture dépasse la pression d'ouverture du distributeur de matière lubrifiante (1), et en ce que le conduit de retour (12) présente, entre le clapet de décharge (16) et le clapet de non-retour (13a, 13b, 13c) un volume collecteur (14).

3. Dispositif selon la revendication 2, caractérisé en ce que la pression d'ouverture du clapet de décharge (16) est inférieure à la pression maximale que peut produire la pompe (5) dans le conduit d'alimentation (4).

4. Dispositif selon la revendication 2 ou la revendication 3, caractérisé en ce que le conduit d'alimentation (4) est divisé en plusieurs lignes de lubrifiant (7a, 7b, 7c) qui peuvent être mises en circuit indépendamment les unes des autres et en ce que chacune des lignes de lubrifiant (7a, 7b, 7c) débouche, par l'intermédiaire du conduit de retour (12a, 12b, 12c) qui s'y raccorde et du clapet anti-retour (13a, 13b, 13c) associé, dans le volume collecteur (14) commun.

5. Dispositif selon l'une des revendications 2 à 4, caractérisé en ce que le clapet de décharge (16) est disposé à proximité de la zone supérieure du volume collecteur (14).

6. Dispositif selon l'une des revendications 2 à 5, caractérisé en ce que le volume collecteur (14) se trouve dans un récipient (15) auquel sont fixés le clapet de décharge (16) ainsi que les clapets de non-retour (13a, 13b, 13c) et ce, de préférence par vissage.

7. Dispositif selon la revendication 1, caractérisé en ce que les moyens permettant d'obtenir, au choix, un niveau de pression élevé ou un niveau de pression abaissé par rapport à celui-ci, consistent en une soupape à deux voies (9), qui relie, dans ses deux positions, le côté refoulement de la pompe (5) et le conduit d'alimentation (4), la soupape à deux voies (9) reliant, exclusivement dans sa première position, le côté refoulement de la pompe (5) en outre, et avec intercalation d'un étrangleur (10), au réservoir (6).

8. Dispositif selon la revendication 7, caractérisé en ce que l'étrangleur (10) est conçu variable pour le réglage du niveau de pression abaissé.

9. Dispositif selon l'une des revendications 1 à 8, caractérisé en ce que, pour une pression de refoulement maximale de la pompe (5) de 25 à 30 bars, les pressions d'ouverture des distributeurs de matière lubrifiante (1) se situent entre 6 et 12 bars, celles des clapets de non-retour (13a, 13b, 13c) entre 0,5 et 1 bar et celle du clapet de décharge (16) entre 15 et 20 bars.
